# EUROPEAN PATENT SPECIFICATION

(11) **EP 4 187 226 B1**
(45) Date of publication and mention of the grant of the patent: **12.06.2024**
(21) Application number: 21210230.5
(22) Date of filing: 24.11.2021
(51) Int. Cl.: G01N 1/14, G01F 1/708

(54) **SAMPLE PREPARATION ARRANGEMENT**
PROBENVORBEREITUNGSANORDNUNG
AGENCEMENT DE PRÉPARATION D'ÉCHANTILLONS

(43) Date of publication of application: 31.05.2023
(73) Proprietor: Hach Lange GmbH, 14163 Berlin (DE)
(72) Inventor: GOLITZ, Andreas, 47475 Kamp-Lintfort (DE); BATTEFELD, Manfred, 40211 Düsseldorf (DE)
(74) Representative: terpatent Patentanwälte und European Patent Attorneys ter Smitten Eberlein -Van Hoof

(56) References cited:
- WO-A1-2021/018404
- DE-U1-202020 104 201
- US-A1- 2016 200 607

## Description

The invention refers to a liquid sample preparation arrangement as a part of a process water analyzer arrangement and to a method for determining a sample filter clogging condition value of an immersion filter probe of the sample preparation arrangement.

A typical process water analyzer arrangement is disclosed in WO 2021 018 404 A1. The process water analyzer arrangement is provided with a sample preparation arrangement comprising a stationary immersion filter probe being immersed into a water basin and is provided with a land-based analyzing arrangement comprising a sample pump and a physical process water sample analyzer, e.g. a photometric analyzer, for analyzing the filtered water sample. The filter probe is provided with a sample filter membrane which is periodically or continuously cleaned by a venting device providing an air bubble carpet at the outside of the filter membrane. However, clogging of the filter membrane cannot be completely avoided after a while.

DE 20 2020 104 201 U1 discloses a process water analyser arrangement with a precise water flow sensor arrangement.

US 2016/0 200 607 A1 discloses a wastewater treatment plant including a membrane filter unit, whereas the clogging state of the filter unit is monitored by means of rotameters or of a pressure transducer.

The sample pump is typically provided as a peristaltic hose pump because this pump type is principally robust against clogging, and the pump hose being the only pump part coming into direct contact with the pumped water can easily be substituted. A peristaltic hose pump principally cannot be used to precisely define the pumped liquid volume by simply counting the number of rotations of the pump rotor because the pumping chamber is flexible, and the pumping chamber volume depends on several factors. The total pumping performance of the peristaltic hose pump particularly depends on the filter membrane clogging condition causing a particular flow resistance as well as on the pump hose condition of the flexible and deformable pump hose of which the pumping performance deteriorates due to aging and wearing effects of the pump hose.

Therefore, even with a water flow sensor arrangement being provided in-line with the filter probe and the sample pump, it is not possible to clearly identify if a worsening of the total pumping performance is caused by the sample pump or by a clogging sample filter membrane, or by both.

It is an object of the invention to provide a sample preparation arrangement including a sample filter membrane for a process water analyzer arrangement and a related method for determining a sample filter membrane clogging condition value of the sample filter membrane.

This object is solved, according to the invention, with a sample preparation arrangement with the features of apparatus claim 1 and with a method for determining a sample filter clogging condition value of the sample preparation arrangement with the features of method claim 7.

The sample preparation arrangement according to the invention comprises an immersion filter probe being arranged within the water basin and a sample preparation base device for controlling and pumping the water sample to a process water sample analyzer for quasi-continuously analyzing a water sample filtered by the immersion filter probe. The preferably land-based sample preparation base device comprises a unidirectional or bidirectional peristaltic hose sample pump for pumping the water sample from the immersion filter probe forward to the water sample analyzer. The peristaltic hose sample pump is fluidically arranged between the filter probe and the water sample analyzer.

The sample pump comprises a flexible elastic peristaltic pump hose, a pump motor and a peristaltic pump rotor for providing a peristaltic deformation of the deformable flexible pump hose. A peristaltic hose pump is principally robust against clogging and completely fluidically closes the pump hose when the pump rotor stops. The pumping performance of the sample pump substantially depends on the elasticity and dynamic quality of the peristaltic pump hose and on the absolute dynamic hydraulic pressure upstream of the sample pump. And the absolute dynamic hydraulic pressure upstream of the sample pump substantially depends on the filter flow resistance which is substantially influenced by the filter membrane clogging condition.

The sample preparation arrangement is provided with a water flow sensor arrangement being fluidically arranged in-line with the sample pump and the water sample analyzer. The water flow sensor arrangement generally can be of the unidirectional or of the bidirectional type, but is preferably of the unidirectional type and determines the sample flow in forward direction from the immersion filter probe to the water sample analyzer.

The flow sensor arrangement preferably detects and determines the time for pumping a total flow volume in the range of less than several milliliters and with an accuracy/resolution of preferably at least 2% or better.

The immersion filter probe comprises a sample filter membrane being proximally mechanically supported by a suitable support structure so that the sample filter membrane is perfectly mechanically supported and is not movable when the water is being pumped or sucked in forward direction through the sample filter membrane to the sample pump. Preferably, the relatively thin sample filter membrane is distally not mechanically supported so that a backward pumping action could easily cause a break of the sensible sample filter membrane. Therefore, a backward pumping action should be avoided.

The sample preparation arrangement is provided with a hydrostatic pressure memory for memorizing a static hydraulic pressure caused by the vertical pump height between the sample pump and the water level surface in the water basin provided with the filter probe. The vertical pump height between the static sample pump and the water level surface in the water basin usually is a constant value and is memorized in the hydrostatic pressure memory.

The sample preparation arrangement is provided with a hydraulic pressure sensor fluidically arranged at the fluid line between the immersion filter probe and the sample pump. The hydraulic pressure sensor detects the pressure of the water column in the fluid line upstream of the sample pump.

This arrangement generally allows to check and to supervise the hydraulic pressure upstream of the sample pump during a pumping action and when the sample pump is stopped. This allows to control, if the sampling arrangement comprising the sample pump, the immersion filter probe and the fluid line between the filter probe and the sample pump is working properly. The vertical water column in the sample line between the basin water level surface and the sample pump causes a static hydraulic pressure. If the total dynamic hydraulic pressure measured upstream of the sample pump during a pump action falls under a memorized critical minimum pressure value which value depends on the total static hydraulic pressure memorized in the hydrostatic pressure memory, it is assumed that the sample preparation arrangement is not working properly anymore, so that a corresponding signal is generated.

The sample preparation arrangement further comprises an electronic filter clogging condition determination module for determining the sample filter clogging condition value of the sample filter membrane. The clogging condition determination module is informationally connected to the sample pump, the pressure sensor, the hydrostatic pressure memory, and the flow sensor arrangement by suitable signal connections. The clogging determination module can actively control the action of the sample pump.

The filter clogging condition determination module provides the following method steps for determining the sample filter clogging condition value:
The sample pump is driven in forward direction for pumping water from the water basin through the filter membrane of the immersion filter probe with a time-related liquid flow detected by the water flow sensor arrangement. During the sample pump driving, the dynamic hydraulic pressure is detected by the pressure sensor. Finally, the filter clogging condition determination module determines the sample filter clogging condition value based on the static hydraulic pressure memorized in the hydrostatic pressure memory, the dynamic hydraulic pressure measured by the pressure sensor during the sample pump driving, and the detected time-related liquid flow.

The measured dynamic pressure is the sum of the known and memorized static hydraulic pressure and the transmembrane pressure drop caused by the fluidic resistance of the sample filter membrane during a pumping action. The transmembrane pressure value depends on the known time-related liquid flow through the membrane detected by the water flow sensor unit so that the specific membrane resistance can be determined which is an indicator for the clogging condition of the sample filter membrane. The sample filter clogging condition value determined by the clogging condition determination module can be of any suitable nature, for example, can be a relative clogging value between 0%, indicating no filter membrane clogging at all, and 100% indicating a massive clogging requiring a mechanical filter membrane cleaning or a substitution of the filter membrane.

Preferably, the pressure sensor is a part of the sample preparation base device and, even more preferably, is provided close to the sample pump. The closer the pressure sensor is arranged to the sample pump, the more information can be generated from the time-related pressure pattern about the condition or aging of the peristaltic pump hose of the sample pump. Preferably, the recorded pressure pattern is compared with an ideal pressure pattern of a new and perfect pump hose to thereby generate a pressure-pattern-based hose condition value.

Preferably, the water flow sensor arrangement is a unidirectional water flow sensor arrangement. The water flow sensor arrangement can be provided with two sensor elements and preferably determines a forward air bubble travel time between the two sensor elements. The air bubble is injected upstream of the two sensor elements, and even more preferably is injected upstream of the sample pump. When the sample pump is running, the liquid pressure upstream of the sample pump is below atmospheric pressure so that an air bubble can simply be injected by opening an air bubble injection valve to atmospheric air. However, an air bubble flow sensor arrangement can only be used in forward flow direction.

Preferably, the sample preparation arrangement comprises a motor speed control for controlling the motor speed of the pump motor driving the pump rotor. Even more preferably, the pump motor is a step motor. Knowing the number of rotor rotations per time for generating the corresponding time-related liquid flow detected by the water flow sensor arrangement and knowing the corresponding dynamic hydraulic pressure downstream of the sample pump allows to finally determine a hose condition value.

In particular, the motor speed control drives the sample pump with a known time-related number of rotor rotations determined by the motor speed control for pumping sample water with the correlated time-related liquid flow through the filter membrane, and the filter clogging determination module determines a hose condition value based on the dynamic hydraulic pressure value, the known time-related number of pump rotor rotations and the correlated time-related liquid flow. The higher the number of pump rotations is for pumping a standard liquid/water volume at a standard dynamic pressure value the worse is the hose condition value.

As a result, the sample preparation arrangement supervises and monitors the sample filter clogging condition as well as the pump hose condition quasi-continuously and generates corresponding signals to avoid an improper operation of the sample preparation arrangement.

Preferably, the static hydraulic pressure is determined with the following method steps:
Stopping the sample pump, measuring the static hydraulic pressure detected by the pressure sensor during the sample pump stopping, and memorizing the static hydraulic pressure in the hydrostatic pressure memory.

As a result, the static hydraulic pressure is determined automatically by the sample preparation arrangement so that there is no need to input the static hydraulic pressure manually or otherwise. The static hydraulic pressure can be determined on-line and periodically to avoid consecutive errors in the determination of the filter clogging condition and/or the pump hose condition.

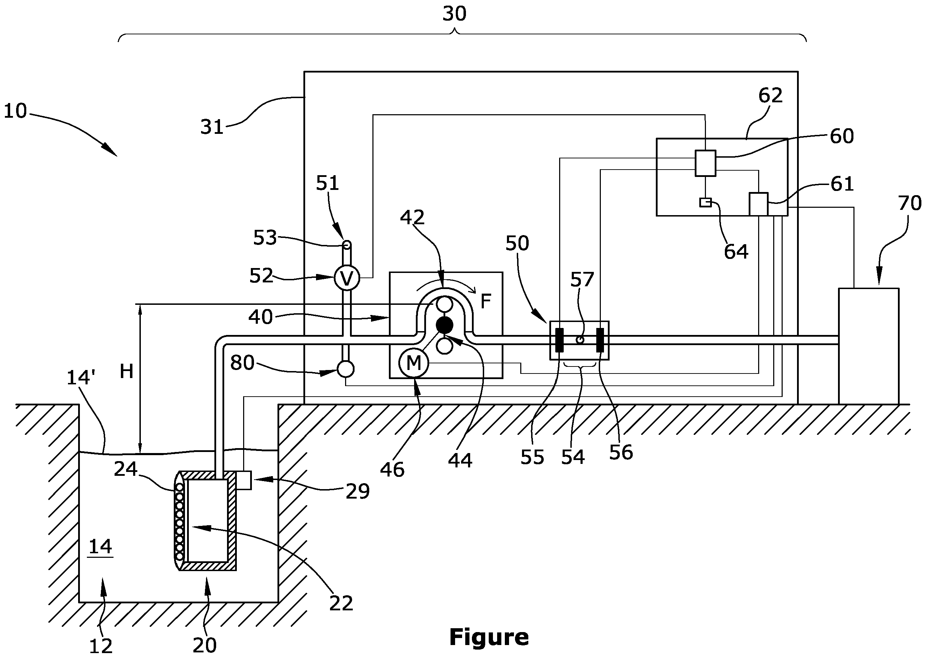

An embodiment of the invention is described with reference to the enclosed drawing:
The figure shows schematically a process water analyzer arrangement with a sample preparation arrangement comprising an immersion filter probe in a water basin, a land-based sample preparation base device and a separate water sample analyzer.

The figure schematically shows a typical process water analyzer arrangement 10 being arranged at a water treatment plant comprising a water basin 12 filled with water 14. The process water analyzer arrangement 10 comprises a sample preparation arrangement 30 which comprises an immersion filter probe 20 arranged in the water basin 12 and a land-based sample preparation base device 31. The sample preparation base device 31 substantially comprises a unidirectional sample pump 40, a water flow sensor arrangement 50, a hydraulic pressure sensor 80 and a filter clogging condition determination module 60.

The water sample analyzer 70 is a photometer determining the transmission or the absorption of a water sample being treated by a suitable color-changing reagent and being pumped by the sample pump 40 to the process water sample analyzer 70.

The water basin 12 is always filled with water 14 defining a water level surface 14' which is at a substantially constant level within the water basin 12. The immersion filter probe 20 is statically arranged in the water basin 12 at a constant vertical position and is provided with a sample filter membrane 24 being proximally supported by a membrane support structure 22 which can be, for example, a quadratic wire grid raster. The sample filter membrane 24 is completely immersed into the water 14. The immersion filter probe 20 is provided with an external temperature sensor 29 for sensing the temperature of the basin water 14.

The peristaltic hose sample pump 40 comprises a pump motor 46 being a speed-controlled step motor, a peristaltic pump rotor 44 and a flexible elastic peristaltic pump hose 42 being continuously deformed by the cooperating rotating pump rotor 44. The sample pump 40 is fluidically arranged between the filter probe 20 and the water flow sensor arrangement 50 and can be driven in forward direction F for pumping a water sample to the water flow sensor arrangement 50 and the water sample analyzer 70. One full rotation of the pump rotor 44 pumps, under perfect conditions, 200 µl water per rotation, and pumps under worse conditions, less than 100 µl per rotation. The total pumping rate and pumping performance of the pump 40 substantially depends, among other less important factors, on the clogging of the sample filter membrane 24 and on the physical condition of the pump hose 42.

The pump motor 46 is controlled by a motor speed control 61 being a part of an electronic control unit 62.

The hydraulic pressure sensor 80 is provided fluidically between the filter probe 20 and the sample pump 40, and is provided adjacent to the sample pump 40. The pressure sensor 80 is part of the sample preparation base device 31. The sample pump 40 is arranged in a hydrostatic pump height with a substantially constant height value H above the basin water level surface 14'. The static hydraulic pressure value SP is memorized in a hydrostatic pressure memory 64 being a part of the sample preparation control unit 62. After the water analyzer arrangement 10 has been mounted to the corresponding plant site, the static hydraulic pressure SP is entered into and is memorized by the hydrostatic pressure memory 64.

The water flow sensor arrangement 50 is provided with two conductivity sensor elements 55, 56 and determines a forward air bubble travel time t between the two sensor elements 55, 56. The volume of the liquid tube between the two conductivity sensor elements 55,56 defines a constant filtration volume FV of, for example, 0,2 ml.

The corresponding air bubble is generated by an air bubble generator 51 provided fluidically upstream of the and fluidically in-line with the sample pump 40. The air bubble generator 51 substantially comprises an air bubble valve 52 allowing an air bubble to enter the water flowing from the immersion filter probe 20 the sample pump 40 during a sample pump pumping action. Typically the air bubble valve 52 opens for, for example, 250 ms so that a suitable air bubble volume is sucked through an air inlet 53 and flows through the air bubble valve 52 into the water current.

After a filter condition determination has been triggered automatically or manually, for example once a day, the filter clogging condition determination module 60 provides the following method steps:
When the filter condition determination process is started, the sample pump 40 is activated to continuously pump water from the immersion filter probe 20 to the analyzer 70 in forward direction F so that the filter membrane 24 is in direct contact with the filter membrane support structure 22 and is not bulged. During the forward pumping action, the air bubble generator 51 generates an air bubble in the water current flowing to the sample pump 40 and to the analyzer 70. When first flow sensor element 55 detects the passing air bubble, a detection sequence is started until the same air bubble passes the second flow sensor element 56 which indicates that a defined filtration volume FV of 0,2 ml has flowed through the filter membrane 24 during a time t needed to pump the defined filtration volume FV.

The filter clogging condition determination module 60 counts the total number of motor rotor rotations R and records the time t which is necessary to pump the defined filtration volume FV through the filter membrane 24. During the forward pumping action, the filter clogging condition determination module 60 also detects and records the absolute dynamic hydraulic pressure DP measured by the pressure sensor 80.

The pumping efficiency of the sample pump 40 is the quotient of the defined filtration volume FV and of the number of rotor rotations R needed for pumping the defined filtration volume FV. The pumping efficiency of the sample pump 40 depends on the specific filter flow resistance being substantially defined by the clogging condition of the filter membrane 24, the known water temperature T defining the viscosity of the water and detected by the temperature sensor 29, the known static hydraulic pressure SP and the physical condition of the pump hose 42.

The filter clogging condition determination module 60 can now determine a specific filter flow resistance and a correlated sample filter clogging condition value CF based on the known time-related liquid flow FV/t, the static hydraulic pressure SP, the specific liquid viscosity and the dynamic hydraulic pressure DP. The sample filter clogging condition value CF is determined with a corresponding memorized membrane condition map indicating a sample filter clogging condition value CF for every combination of the time-related liquid flow FV/t, the static hydraulic pressure SP, the specific liquid viscosity based on the liquid temperature T, and the dynamic hydraulic pressure DP. A filter clogging condition value CF=0 is perfect, a filter clogging condition value CF=100% indicates a too high clogging of the filter membrane 24 so that the filter membrane 24 should be cleaned or substituted.

The filter clogging condition determination module 60 also determines a hose condition value CH based on the known rotor speed R/t determined by the motor speed control 61 for pumping sample water, the correlated liquid flow FV/t of the water pumped through the filter membrane 24, and the corresponding dynamic pressure DP measured by the pressure sensor 80. The hose condition value CH is determined with a corresponding memorized hose condition map indicating the hose condition value CH for every combination of rotor speed R/t, liquid flow FV/t and dynamic pressure DP. The hose condition value CH indicates, if the pump hose 42 is in an acceptable condition or should be replaced.

## Claims

1. A sample preparation arrangement (30) for a process water analyzer arrangement (10), the sample preparation arrangement (30) comprising
an immersion filter probe (20) arranged in a water basin (12), the immersion filter probe (20) comprising a sample filter membrane (24),
a peristaltic hose sample pump (40) for pumping a water sample from the immersion filter probe (20) to the sample pump (40), the sample pump (40) comprising a peristaltic pump hose (42) and a pump motor (46) driving a peristaltic pump rotor (44),
a water flow sensor arrangement (50) being fluidically arranged in-line with the sample pump (40),
a hydrostatic pressure memory (64) for memorizing a static hydraulic pressure (SP) caused by the vertical pump height (H) between the sample pump (40) and the water level surface (14') in the water basin (12),
a hydraulic pressure sensor (80) fluidically arranged between the immersion filter probe (20) and the sample pump (40), and
a filter clogging condition determination module (60) for determining the sample filter clogging condition value (CF) of the sample filter membrane (24),
wherein the filter clogging determination module (60) is configured to determine the sample filter clogging condition value (CF) based on the static hydraulic pressure (SP), the dynamic hydraulic pressure (DP) and the related detected time-related flow (FV/t).

2. The sample preparation arrangement (30) of claim 1, wherein the sample pump (40) and the pressure sensor (80) both are part of a land-based sample preparation base device (31).

3. The sample preparation arrangement (30) of one of the preceding claims, wherein the water flow sensor arrangement (50) is a unidirectional water flow sensor arrangement (50).

4. The sample preparation arrangement (30) of one of the preceding claims, wherein the water flow sensor arrangement (50) is provided with two sensor elements (55, 56) and determines a forward air bubble travel time (t) between the two sensor elements (55,56) of an air bubble (57) being injected upstream of the two sensor elements (55, 56), preferably being injected upstream of the sample pump (40).

5. The sample preparation arrangement (30) of one of the preceding claims, comprising a motor speed control (61) for controlling the motor speed of the pump motor (46).

6. The sample preparation arrangement (30) of one of the preceding claims, wherein the pump motor (46) is a step motor.

7. A method for determining a sample filter clogging condition value (CF) of an immersion filter probe (20) of the sample preparation arrangement (30) with the features of one of claims 1 to 6, with the method steps provided by the filter clogging condition determination module (60):
driving the sample pump (40) in forward direction (F) for pumping water through the filter membrane (24) with a time-related flow (FV/t) detected by the water flow sensor arrangement (50), and
measuring the dynamic pressure (DP) detected by the pressure sensor (80) during the sample pump driving.

8. The method of claim 7, wherein the pump motor (46) is speed-controlled by a motor speed control (61), with the method steps:
the motor speed control (61) driving the sample pump (40) with a rotor speed (R/t) determined by the motor speed control (61) for pumping sample water with the correlated time-related liquid flow (FV/t) through the filter membrane (24), and
the filter clogging condition determination module (60) determining a hose condition value (CH) based on the dynamic hydraulic pressure (DP), the known rotor speed (R/t) and the correlated known time-related flow (FV/t).

9. The method of one of the preceding method claims, wherein the static hydraulic pressure (SP) is determined by the method steps:
stopping the sample pump (40),
measuring the static hydraulic pressure (SP) detected by the pressure sensor (80) during the sample pump stopping, and
memorizing the static hydraulic pressure (SP) in the hydrostatic pressure memory (64).

10. A water process analyzer arrangement (10) comprising the sample preparation arrangement (30) of one of claims 1 to 6, further comprising a water sample analyzer (70) for analyzing a water sample prepared by the sample preparation arrangement (30).

## Patentansprüche

1. Eine Probenaufbereitungsanordnung (30) für eine Prozess-Wasseranalysatoranordnung (10), wobei die Probenaufbereitungsanordnung (30) aufweist
eine Tauchfiltersonde (20), die in einem Wasserbecken (12) angeordnet ist, wobei die Tauchfiltersonde (20) eine Probenfiltermembran (24) aufweist,
eine Probenahmepumpe (40) mit peristaltischem Schlauch zum Pumpen einer Wasserprobe von der Tauchfiltersonde (20) zu der Probenahmepumpe (40), wobei die Probenahmepumpe (40) einen peristaltischen Pumpenschlauch (42) und einen Pumpenmotor (46) aufweist, der einen peristaltischen Pumpenrotor (44) antreibt,
eine Wasserdurchfluss-Sensoranordnung (50), die fluidisch in Reihe mit der Probenahmepumpe (40) angeordnet ist,
einen hydrostatischen Druckspeicher (64) zum Speichern eines statischen hydraulischen Drucks (SP), der durch die vertikale Pumphöhe (H) zwischen der Probenahmepumpe (40) und der Wasserspiegeloberfläche (14') in dem Wasserbecken (12) verursacht wird,
einem hydraulischen Drucksensor (80), der fluidisch zwischen der Tauchfiltersonde (20) und der Probenahmepumpe (40) angeordnet ist, und ein Filterverstopfungs-Bestimmungsmodul (60) zum Bestimmen des Probenfilter-Verstopfungszustandswertes (CF) der Probenfiltermembran (24),
wobei das Filterverstopfungs-Bestimmungsmodul (60) ausgebildet ist, um den Probenfilter-Verstopfungszustandswert (CF) auf der Grundlage des statischen hydraulischen Drucks (SP), des dynamischen hydraulischen Drucks (DP) und des zugehörigen erfassten zeitbezogenen Flusses (FV/t) zu bestimmen.

2. Die Probenaufbereitungsanordnung (30) nach Anspruch 1, wobei die Probenahmepumpe (40) und der Drucksensor (80) beide Teil einer landgestützten Probenaufbereitungs-Basisvorrichtung (31) sind.

3. Die Probenaufbereitungsanordnung (30) nach einem der vorangehenden Ansprüche, wobei die Wasserdurchfluss-Sensoranordnung (50) eine unidirektionale Wasserdurchfluss-Sensoranordnung (50) ist.

4. Die Probenaufbereitungsanordnung (30) nach einem der vorangehenden Ansprüche, wobei die Wasserdurchfluss-Sensoranordnung (50) zwei Sensorelemente (55, 56) aufweist und eine Vorwärts-Luftblasenlaufzeit (t) zwischen den beiden Sensorelementen (55, 56) einer stromaufwärts der beiden Sensorelemente (55, 56), vorzugsweise stromaufwärts der Probenahmepumpe (40), injizierten Luftblase (57) ermittelt.

5. Die Probenaufbereitungsanordnung (30) nach einem der vorangehenden Ansprüche, aufweisend eine Motordrehzahlregelung (61) zum Regeln der Motordrehzahl des Pumpenmotors (46).

6. Die Probenaufbereitungsanordnung (30) nach einem der vorangehenden Ansprüche, wobei der Pumpenmotor (46) ein Schrittmotor ist.

7. Ein Verfahren zur Bestimmung eines Probenfilter-Verstopfungszustandswertes (CF) einer Tauchfiltersonde (20) der Probenaufbereitungsanordnung (30) mit den Merkmalen einer der Ansprüche 1 bis 6, mit den durch das Filterverstopfungs-Bestimmungsmodul (60) geleisteten Verfahrensschritten:
Betreiben der Probenahmepumpe (40) in Vorwärtsrichtung (F) zum Pumpen von Wasser durch die Filtermembran (24) mit einem von der Wasserdurchfluss-Sensoranordnung (50) erfassten zeitbezogenen Fluss (FV/t), und
Messen des von dem Drucksensor (80) erfassten dynamischen Drucks (DP) während des Betreibens der Probenahmepumpe.

8. Das Verfahren nach Anspruch 7, wobei der Pumpenmotor (46) durch eine Motordrehzahlregelung (61) drehzahlgeregelt wird, mit den Verfahrensschritten:
die Motordrehzahlregelung (61) steuert die Probenahmepumpe (40) mit einer von der Motordrehzahlregelung (61) bestimmten Rotordrehzahl (R/t) zum Pumpen von Probenwasser mit dem korrelierten zeitbezogenen Flüssigkeitsstrom (FV/t) durch die Filtermembran (24), und
das Filterverstopfungs-Bestimmungsmodul (60) einen Schlauchzustandswert (CH) auf der Grundlage des dynamischen hydraulischen Drucks (DP), der bekannten Rotordrehzahl (R/t) und des korrelierenden bekannten zeitbezogenen Flusses (FV/t) bestimmt.

9. Das Verfahren nach einem der vorangehenden Verfahrensansprüche, wobei der statische hydraulische Druck (SP) durch die Verfahrensschritte bestimmt wird:
Anhalten der Probenahmepumpe (40),
Messen des während des Anhaltens der Probenahmepumpe vom Drucksensor (80) erfassten statischen hydraulischen Drucks (SP), und
Speichern des statischen hydraulischen Drucks (SP) im hydrostatischen Druckspeicher (64).

10. Prozess-Wasseranalysatoranordnung (10), die die Probenaufbereitungsanordnung (30) nach einem der Ansprüche 1 bis 6 aufweist, ferner aufweisend einen Wasserprobenanalysator (70) zum Analysieren einer durch die Probenaufbereitungsanordnung (30) aufbereiteten Wasserprobe.

## Revendications

1. Un arrangement de préparation d'échantillon (30) pour un arrangement de processus d'analyse de l'eau (10), l'arrangement de préparation d'échantillon (30) comprenant
une sonde de filtre à immersion (20) arrangée dans un bassin d'eau (12), la sonde de filtre à immersion (20) comprenant une membrane de filtre à échantillon (24),
une pompe à échantillon à tuyau péristaltique (40) pour pomper un échantillon d'eau de la sonde de filtre à immersion (20) vers la pompe à échantillon (40), la pompe à échantillon (40) comprenant un tuyau de pompe péristaltique (42) et un moteur de pompe (46) entraînant un rotor à pompe péristaltique (44),
un arrangement de senseur de flux d'eau (50) étant agencé fluidiquement en ligne avec la pompe à échantillon (40),
une mémoire de pression hydrostatique (64) pour mémoriser une pression hydraulique statique (SP) causée par la hauteur verticale de la pompe (H) entre la pompe à échantillon (40) et la surface du niveau d'eau (14') dans le bassin d'eau (12),
un capteur de pression hydraulique (80) disposé fluidiquement entre la sonde de filtre à immersion (20) et la pompe à échantillon (40), et
un module de détermination de l'état de colmatage du filtre (60) pour déterminer la valeur de l'état de colmatage du filtre de l'échantillon (CF) de la membrane de filtre à échantillon (24),
dans lequel le module de détermination de l'état de colmatage du filtre (60) est configuré pour déterminer la valeur de l'état de colmatage du filtre à échantillon (CF) en fonction de la pression hydraulique statique (SP), de la pression hydraulique dynamique (DP) et du flux correspondant détecté en fonction du temps (FV/t).

2. L'arrangement de préparation d'échantillons (30) de la revendication 1, dans lequel la pompe à échantillon (40) et le capteur de pression (80) font tous deux partie d'un dispositif de base terrestre de préparation d'échantillons (31).

3. L'arrangement de préparation d'échantillons (30) de l'une des revendications précédentes, dans lequel le arrangement de senseur de flux d'eau (50) est un arrangement de senseur de flux d'eau unidirectionnel (50).

4. L'arrangement de préparation d'échantillons (30) de l'une des revendications précédentes, dans laquelle l'arrangement de senseur de flux d'eau (50) est fourni avec deux éléments de senseur (55, 56) et détermine un temps de déplacement de bulle d'air vers l'avant (t) entre les deux éléments de senseur (55, 56) d'une bulle d'air (57) étant injectée en amont des deux éléments de senseur (55, 56), préférablement étant injectée en amont de la pompe à échantillon (40).

5. L'arrangement de préparation d'échantillons (30) de l'une des revendications précédentes, comprenant un contrôle de vitesse du moteur (61) pour contrôler la vitesse du moteur de pompe (46).

6. L'arrangement de préparation d'échantillons (30) de l'une des revendications précédentes, dans lequel le moteur de pompe (46) est un moteur à pas.

7. Un méthode de détermination d'une valeur de condition de colmatage du filtre à échantillon (CF) d'une sonde de filtre à immersion (20) de l'arrangement de préparation d'échantillon (30) présentant les caractéristiques de l'une des revendications 1 à 6, les marches du procédé étant fournies par le module de détermination de l'état de colmatage du filtre (60) :
entraîner la pompe à échantillon (40) dans le sens direct (F) pour pomper de l'eau à travers la membrane de filtre (24) avec un flux relatif au temps (FV/t) détecté par l'arrangement de senseur de flux d'eau (50), et
mesurer la pression dynamique (DP) détectée par le senseur de pression (80) pendant l'entraînement de la pompe à échantillon.

8. La méthode de la revendication 7, dans laquelle le moteur de pompe (46) est contrôlé en vitesse par un contrôle de vitesse du moteur (61), avec les marches de la méthode :
le contrôle de vitesse du moteur (61) entraîne la pompe à échantillon (40) avec une vitesse de rotor (R/t) déterminée par le contrôle de vitesse du moteur (61) pour pomper l'eau de l'échantillon avec le flux liquide corrélé au temps (FV/t) à travers la membrane de filtre (24), et
le module de détermination de l'état de colmatage du filtre (60) détermine une valeur d'état du tuyau (CH) en fonction de la pression hydraulique dynamique (DP), de la vitesse de rotation connue (R/t) et du flux corrélé connu en fonction du temps (FV/t).

9. La méthode de l'une des revendications précédentes, dans laquelle la pression hydraulique statique (SP) est déterminée par les marches :
arrêt de la pompe à échantillon (40),
mesurer la pression hydraulique statique (SP) détectée par le senseur de pression (80) pendant l'arrêt de la pompe à échantillon, et
mémoriser la pression hydraulique statique (SP) dans la mémoire de pression hydrostatique (64).

10. Arrangement de processus d'analyse de l'eau (10) comprenant l'arrangement de préparation d'échantillon (30) de l'une des revendications 1 à 6, comprenant en outre un analyseur d'échantillon d'eau (70) pour analyser un échantillon d'eau préparé par l'arrangement de préparation d'échantillon (30).
